# EUROPEAN PATENT APPLICATION

(11) **EP 3 106 962 A1**
(43) Date of publication of application: **21.12.2016**
(21) Application number: 16161274.2
(22) Date of filing: 18.03.2016
(51) Int. Cl.: G06F 1/16, F16M 13/00, H04N 5/64

(54) **DISPLAY APPARATUS AND DRIVING METHOD OF DISPLAY APPARATUS**

(30) Priority: 04.06.2015 KR 20150079482
(71) Applicant: Samsung Electronics Co., Ltd., Gyeonggi-do 16677 (KR)
(72) Inventor: KANG, Kun-sok, Gyeonggi-do (KR); LEE, Kyung-hoon, Seoul (KR); YU, Mi-ra, Seoul (KR); LEE, Sung-han, Gyeonggi-do (KR); CHOI, Sang-on, Gyeonggi-do (KR); CHOI, Eun-seok, Gyeonggi-do (KR)
(74) Representative: Appleyard Lees IP LLP

(57) **Abstract**

A display apparatus and a driving method of the display apparatus are provided. The display apparatus includes a display configured to display an image, a stand configured to support the display, a stand driver configured to control a position of the stand according to a user input, a detector configured to detect an operation state of the stand driver, and a controller configured to generate an alarm signal indicating an abnormal operation state of the stand driver in response to the operation state detected by the detector indicating the abnormal operation state.

## Description

### BACKGROUND

### Field

Apparatuses and methods consistent with exemplary embodiments relate to a display apparatus and a driving method of the display apparatus, and more particularly, to a display apparatus and a driving method of the display apparatus which detects an operational state of the stand, and notifies a user of a detected abnormal operation state. The stand may support and move a large television (TV) to perform a welcome function, thereby providing convenience for the user.

### Description of Related Art

In recent years, due to curved or bendable display products, motor or actuator driven bodies have increasingly been provided for mounting various display products. Due to the increase in electric wall mounts and driving methods panels or stands, the need for a motion detection method to prevent jamming of the motor has increased.

Related to the jamming, accidents in vehicle windows, automated doors, elevators, and the like may be prevented by detecting the jamming. A normal operation and an abnormal operation may be detected using a sensing method (for example, capacitance, infrared (IR), and a ultrasonic wave) or by detecting a current change or torque change using an encoder in a driving motor.

However, solutions using these techniques may not be applied to products without a motor encoder or without a touch area, and it may be practically difficult to detect an abnormal state in driving bodies having a high gear ratio or having strong torque.

### SUMMARY

Exemplary embodiments may overcome the above disadvantages and other disadvantages not described above. Also, an exemplary embodiment is not required to overcome the disadvantages described above, and an exemplary embodiment may not overcome any of the problems described above.

According to an aspect of an exemplary embodiment, there is provided a display apparatus including: a display configured to display an image; a stand configured to support the display; a stand driver configured to control a position of the stand according to a user input; a detector configured to detect an operation state of the stand driver; and a controller configured to generate an alarm signal indicating an abnormal operation state of the stand driver in response to the operation state detected by the detector indicating the abnormal operation state.

The stand may further include a plate configured to connect the display to the stand, and a plate position of the plate may change in accordance with the position of the stand.

The detector may include: a metallic member affixed to the plate; and a coil disposed over the stand in a position corresponding to the metallic member, a distance between the metallic member and the coil may change in accordance with the position of the stand, and the detector may be further configured to determine the operation state based on an impedance change amount of the coil and the distance between the metallic member and the coil.

The plate may include a plurality of light emitting diodes, and the controller may be further configured to control the plurality of light emitting diodes according to the user input.

The controller may be further configured to generate a signal for driving the display to display an abnormal operation state indicator.

The display apparatus may further include an audio output interface, and the controller may be further configured to indicate the abnormal state by controlling the audio output interface to output an alarm sound.

The stand driver may be further configured to control the position of the stand in response to a control signal being provided from the display.

The display may include a graphic generator configured to control the display to display a graphic indicating the stand driver is controlling the position of the stand.

The display may include a user interface (UI) generator configured to display a UI screen comprising elements to control the detector.

The display apparatus may further include a storage configured to store a reference value corresponding to a normal operation of the stand driver, the detector may be further configured to generate an output value corresponding to the detected operation state; and the controller may be further configured to determine the abnormal operation state by comparing the output value of the detector with the reference value.

The display may further include: a signal processor configured to receive a signal, process the received signal and generate a display signal based on the processed signal; a display panel configured to display the image based on the processed signal; and a user input interface configured to receive the user input.

According to an aspect of another exemplary embodiment, there is provided a stand which supports a display, the stand including: a stand driver configured to control a position of the stand according to a user input received through the display; a detector configured to detect an operation state of the stand driver; and a controller configured to generate an alarm signal indicating an abnormal operation state of the stand driver in response to the operation state detected by the detector indicating the abnormal operation state.

The stand may further include a plate configured to connect the display to the stand, and a plate position of the plate may change in accordance with the position of the stand.

The detector may include: a metallic member affixed to the plate; a coil may be disposed over the stand in a position corresponding to the metallic member, and the detector may be further configured to determine the operation state based on an impedance change amount of the coil and the distance between the metallic member and the coil.

The plate may include a plurality of light emitting diodes, and the controller may be further configured to control the light emitting diodes according to the user input.

The stand may further include a storage configured to store a reference value corresponding to a normal operation of the stand driver, the detector may be further configured to generate an output value corresponding to the detected operation state; and the controller may be further configured to determine the abnormal operation state by comparing the output value of the detector with the reference value.

The controller may be further configured to determine the reference value by controlling the stand driver to repeatedly control the stand to move in first direction and a second direction a determined number of times, and store the determined reference value in the storage.

The controller may be further configured to determine whether the operation state detected by the detector indicates the abnormal operation state by comparing the operation state detected by the detector with the stored reference value after a first time period.

The detector may be further configured to generate a first detection signal and a second detection signal indicating the operation state of the stand driver, and the controller may be further configured to compare the first detection signal and the second detection signal and offset the first detection signal based on the comparing and the stored reference value.

According to an aspect of still another exemplary embodiment, there is provided a method of driving a display apparatus, the method including: driving a display to move in a first direction; detecting an operation state of the display; and notifying the user of the operation state of the display in response to the detecting indicating the operation state of the display is an abnormal operation state.

According to an aspect of yet another exemplary embodiment, there is provided a method of driving a display apparatus, the method including: detecting an operation of a display configured to display an image in response to the display being driven to move in a first direction; and notifying the user of the operation state of the display in response to the detecting indicating the operation state of the display is an abnormal operation state.

According to an aspect of still another exemplary embodiment, there is provided an electronic stand including: a support plate configured to support an external electronic device; a plurality of stand drivers configured to control a height of the support plate, the plurality of stand driver comprising a first stand driver and a second stand driver; a plurality of sensors comprising a first sensor configured to generate a first signal and a second sensor configured to generate a second signal; and a controller configured to control the first stand driver and the second stand driver to cooperatively control the height of the support plate; determine an operation state of the electronic stand based on the first signal and the second signal; and in response to determining the operation state is an abnormal operation state, control the first stand driver and the second stand driver to compensate for the abnormal operation state.

The controller may be further configured to compensate for the abnormal operation state by stopping the first stand driver and the second stand driver.

The controller may be further configured to determine, based on the first signal and the second signal, one among the first stand driver and the second stand driver causing the abnormal operation state, and control the determined one among the first stand driver and the second stand driver to perform a reverse operation.

The controller may be further configured to compensate for the abnormal operation state by controlling the first stand driver and the second stand driver to operate at different rates.

The controller may be further configured to compensate for the abnormal operation state by reversing operation of the first stand driver and the second stand driver.

The controller may be further configured to control the plurality of stand drivers to repeatedly perform a plurality of movement cycles and determine a first reference value and a second reference value based on the first signal and the second signal during the repeatedly performed plurality of movement cycles.

### BRIEF DESCRIPTION OF THE DRAWINGS

The above and/or other aspects will be more apparent by describing exemplary embodiments with reference to the accompanying drawings, in which:
FIGS. 1A, 1B and 1C are diagrams illustrating a stand of a display apparatus according to an exemplary embodiment;
FIG. 2 is a diagram illustrating a detailed configuration of a detection device according to an exemplary embodiment;
FIG. 3 is a diagram illustrating an arrangement structure of a detection device according to an exemplary embodiment;
FIG. 4 is a block diagram illustrating a detailed configuration of the detection device and a motor driving board according to an exemplary embodiment;
FIG. 5 is an illustrative diagram illustrating a sensor coupled to a coil unit according to an exemplary embodiment;
FIGS. 6A and 6B are graphs illustrating change amount in a normal state and an abnormal state determined through a plurality of sensors according to an exemplary embodiment;
FIG. 7 is a flowchart illustrating a stand driving process of a display apparatus according to an exemplary embodiment;
FIG. 8 is a diagram illustrating an operation process of a detection device and motor driving board in a normal operation of a stand according to an exemplary embodiment;
FIG. 9 is a diagram illustrating an operation process of a detection device and motor driving board in an abnormal operation of a stand according to an exemplary embodiment;
FIG. 10 is a diagram illustrating a calibration process according to an exemplary embodiment;
FIG. 11 is a diagram illustrating a calibration process according to an exemplary embodiment;
FIGS. 12, 13, 14A, 14B and 14C are diagrams illustrating various operations of a detection device according to an exemplary embodiment;
FIG. 15 is a block diagram illustrating a display apparatus according to an exemplary embodiment;
FIG. 16 is a block diagram illustrating a display apparatus according to an exemplary embodiment
FIG. 17 is an illustrative diagram illustrating a UI screen for determining whether to perform a welcome function according to an exemplary embodiment;
FIG. 18 is a flowchart illustrating a driving process of a display apparatus according to an exemplary embodiment; and
FIG. 19 is a flowchart illustrating a stand driving process of a display apparatus according to an exemplary embodiment.

### DETAILED DESCRIPTION OF EXEMPLARY EMBODIMENTS

Hereinafter, exemplary embodiments are described in greater detail with reference to the accompanying drawings.

In the following description, unless otherwise described, the same reference numerals are used for the same elements when they are depicted in different drawings. The matters defined in the description, such as detailed construction and elements, are provided to assist in a comprehensive understanding of the exemplary embodiments. Thus, it is understood that exemplary embodiments can be carried out without those specifically defined matters. Also, functions or elements known in the related art are not described in detail since they would obscure the exemplary embodiments with unnecessary detail.

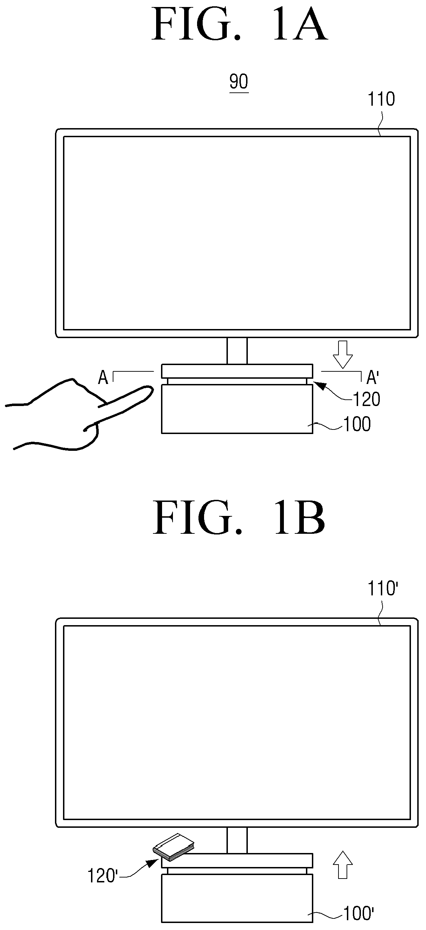

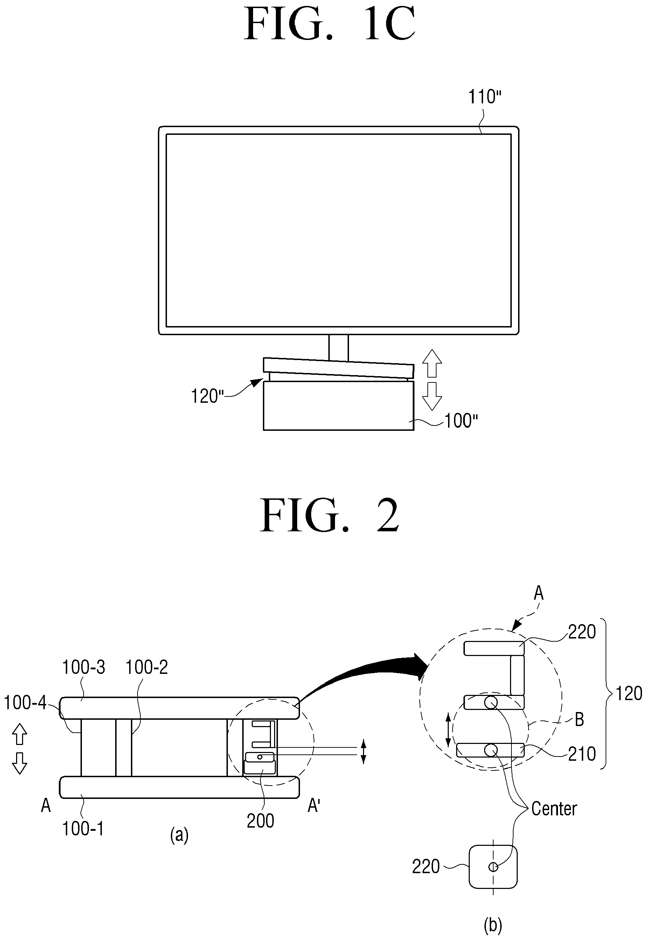

FIGS. 1A, 1B and 1C are diagrams illustrating a stand of a display apparatus according to an exemplary embodiment in various scenarios, and FIG. 2 is a diagram illustrating a detailed configuration of a detection device taken along line A-A' of FIG. 1A, according to an exemplary embodiment.

FIGS. 1A and 1B illustrate application of an external factor, for example, by a finger, a book, or the like. FIG. 1A illustrates an abnormal operation state of a stand 100 in which a stand top plate (see 100-3 of FIG. 2) provided over the stand 100 is lowering, and FIG. 1B illustrates an abnormal operation state of the stand 100 in which the stand top plate 100-3 is rising. FIG. 1C illustrates a scenario caused by an internal factor, for example, an abnormal operation of a motor driving shaft, and illustrates an abnormal operation state due to abnormal moving speed in the raising and lowering of the stand top plate 100-3. The raising and lowering of the stand top plate 100-3 may be performed through raising and lowering of displays 110, 110', and 100" coupled to the stand top plate 100-3.

The exemplary embodiment will be described based on the assumption that a plate is the stand top plate 100-3, but the plate may be another one of a plurality of plates in the stand 100, such as a middle plate. For example, if the plate is provided in the stand 100, the plate may be a driving unit, a moving plate, or the like. In another example, a separate plate being provided below or over the driving unit, and a metallic member to be described later may be formed in the separator plate. Accordingly, for clarity, the stand top plate 100-3 will be described as the driving unit or the plate in an exemplary embodiment, but the stand top plate is not limited thereto.

As shown in FIG. 1A, a display apparatus 90 according to an exemplary embodiment may include a part or all of a stand 100, a display 110, and a detector 120. The particular curvature, plane and size are of the display apparatus 90 may vary according to various exemplary embodiments.

The phase "include a part or all" may one or more of the components may be included. In this case, the phrase indicates that the detector 120 may be integrally configured into the stand 100 or the display 110. The display apparatus 90 will be described to include all the components in the exemplary embodiment, although this is exemplary.

The stand 100 may be a support which supports the display 110, and may include a driving unit configured to move the stand top plate 100-3 provided below the stand 100 to move in a preset direction. The driving unit may refer to a driving unit including the stand top plate 100-3 according to an exemplary embodiment. The stand 100 may further include an audio output unit (audio output interface) configured to notify the user of an abnormal operation. The audio output unit may include an interface or a speaker configured to output an alarm sound, and thus the user may be notified of a required action. In response to the stand 100 being configured in such that the stand top plate 100-3 is omitted or is coupled to the display 110, the stand 100 may freely move the display 100 to move in a preset direction. The stand 100 may provide an alarm signal to generate an alarm sound to the audio output unit. Such an operation may be performed through a controller in the stand 100.

The stand 100 according to an exemplary embodiment may drive the stand top plate 100-3 to move in the preset direction through control of the driving unit. For example, the stand 100 may drive the stand top plate 100-3 to rise and fall, or rotate, thereby controlling a direction of a screen. In this example, the stand 100 may include a driving unit configured to drive the stand top plate 100-3. The driving unit may have various forms, and the driving unit may include the stand top plate 100-3. For example, the driving unit may include a motor, a motor driver (or driving circuit), and a driving shaft 100-2. The driving unit may include an actuator. The driving shaft 100-2 may be a guide rod configured to maintain a fixed interval.

According to an exemplary embodiment the stand 100 may perform a welcome operation. The welcome operation may be performed in conjunction with the display 110, or independent of the display 110. For example, the stand 100 may perform the welcome operation in response to receiving a user command related to the welcome operation from the display 110. In another example, the stand 100 may perform the welcome operation in response to directly receiving the user command through a separate receiver.

In response to the user command for the welcome operation being received, the stand 100 may drive the stand top plate to rise. As the stand top plate 100-3 rises, the stand 100 may display a welcome (or pick-up) indicator by emitting light from a light emitting device, such as a light emitting diode (LED). The user command for the welcome operation may include a power turn-on command or a user command provided in response to a shortcut button of a remote control device, such as a remote controller, being selected. For example, the welcome operation may be performed while a booting operation is performed after the display 110 is turned on according to power application.

The emitted light may be guided by a light guide plate 100-4 as illustrated in FIG. 2. The welcome mode according to an exemplary embodiment may be an operation to welcome the user according to the user command, and the welcome operation may include an operation which emits light from the light emitting unit or displays a graphic, such as an image or a logo, on a screen of the display 110. The mode may refer to an operation manner preset by the user or a system designer. For example, the mode may refer to a state or manner set to perform a series of preset operations, such as operations of raising the stand top plate 100-3 and emitting the light, in response to the welcome mode being selected by the user through a remote controller.

In response to the stand top plate 100-3 being completely raised through the welcome operation, that is, in response to the raising operation of the stand top plate 100-3 being completed, the stand 100 may stop the light emission of the light emitting unit. For example, the stand 100 may stop the light emission through an operation which counts a normal completion time of the welcome operation (for example, 3 seconds). In another example, in response to a signal being received through a device, such as a limit switch formed in the driving shaft (that is, guide rod) which rises and falls in the stand 100 together with the stand top plate 100-3 or through a separate mechanism, the stand 100 may stop the light emission based on the received signal. Accordingly, various modifications may be made in connection with the termination of the raising operation, and thus this is not limited thereto.

The stand 100 may perform various operations in conjunction with the display 110. For example, in response to the user command for performing the welcome operation being received in the display 110, the stand 100 may receive a control signal for the user command. Accordingly, the stand 100 may perform the welcome operation according to the control signal. The welcome operation may be performed during a booting operation of the display 110. In another example, in response to the display 110 being turned off by the user, the stand 100 may terminate the welcome operation in response to receiving the control signal related to the turn-off command from the display 110. In this example, the stand 100 may allow the display 110 to lower. Then, the stand 100 may provide a control signal for notifying the display of the completion of the lowering operation. Accordingly, the display 110 may perform a turn-off operation. For example, the power provided to all or a part of the components in the display 110 may be interrupted.

The stand 100 according to various exemplary embodiments may be configured in various forms. For example, according to an exemplary embodiment, the display 110 may include a poly-based stand. In this example, the stand 100 of FIG. 1A may include the stand top plate 100-3 located in an upper side of the stand 100 and coupled to the driving shaft 100-2, as illustrated in FIG. 2. The stand 100 may be configured in such a manner that the top plate 100-3 is omitted. Accordingly, the stand 100 may have the structure that the stand driving shaft 100-2 is coupled to the display. The stand top plate 100-3 may be formed of a poly-based material. The driving shaft 100-2 may be included in a main body of the stand 100. The main body of the stand 100, for example, a top fixing plate 100-1 of the stand 100 may be formed to expose only the driving shaft 100-2 to the outside. The detector 120 according to an exemplary embodiment may be easily formed through such a structure.

A motor, a driving shaft coupled to the motor, and various circuits, such as the motor driver configured to drive the motor, may be included in the inside of the main body of the stand 100. The circuits may be formed, for example, on a printed circuit board (PCB).

The display 110 may display an image on the screen. In response to the image being viewed by the user after turn-on of the display 110, a raising operation of the display 110 may be performed through the stand top plate 100-3 of the stand 100. In response to the display 100 being turned off by the user, the display 110 may perform a lowering operation through the stand 100, and may perform a rotation operation which rotates the screen of the display 110 left and right according to the request of the user.

In response to the welcome operation (or welcome mode) being performed by the display 110 in conjunction with the stand 100, the display 110 may transmit a received user command to the stand 100. Accordingly, the stand 100 may perform the welcome operation. For example, in response to the user command for the welcome operation being received from the user, the display 110 may display a graphic, such as an image or a logo, on the screen in the booting operation. The display 110 may notify the user that the welcome operation is performing. In another example, the display 110 may request selection of whether to perform the welcome operation from the user by displaying a UI screen for determining whether the user uses the welcome function which operates the stand 100. The description of the welcome operation will be made later in detail. For example, based on the above-described operation, the display 110 may include a graphic generator and a UI generator.

The detector 120 may detect an operation state of the display 110, for example, the operation state of the stand top plate 100-3. For example, the detector 120 may detect the operation state in the raising and lowering operation or the left and right rotation operation of the main body of the display 100 by the stand top plate 100-3. In the operation process, the detector 120 may detect whether the stand top plate 100-3 is in an abnormal operation state. Various abnormal operation states have been illustrated in FIGS. 1A, 1B and 1C. For example, the detector 120 may detect whether the abnormal operation of the stand top plate 100-3 is caused by a body part or a foreign material being jammed in the lowering operation of the stand top plate 100-3, interference by an object, such as a book, in the raising operation of the stand top plate 100-3, or by an abnormal operation of the driving shaft 100-2 being caused wear of the driving shaft 100-2 of the motor or deformation of another mechanism.

In this example, the detector 120 detects an abnormal operation state of the stand top plate 100-3 in a narrow space between the stand top plate 100-3 and the driving unit 100, and may have various forms. For example, as illustrated in FIG. 2, the detector 120 may include a characteristic providing unit 220, that may be formed in a lower end of the display 110. The characteristic providing unit may be configured to change an arbitrary characteristic of a characteristic changing unit, which may be provided in the stand. Thus, as the stand top plate 100-3 is raised and lowered by the driving shaft 100-2, a characteristic, such as an impedance characteristic, a magnitude of a voltage, an amount of current, an intensity of a magnetic field, and the like, may be changed.

According to an exemplary embodiment illustrated in FIG. 2, if a metallic member, such as a metal bracket 220 is included in the characteristic providing unit, and a magnet configured to generate an magnetic field, a light emitting device configured to generate infrared (IR), or the like, being included in the characteristic providing unit, the characteristic changing unit may include a coil unit 210, a magnetic field detector configured to sense an intensity of the magnetic field, and a light receiving unit configured to receive the IR emitted from the light emitting device, which are corresponding to the components of the characteristic providing unit. The detector 120 may be variously modified as described above, and thus the detector 120 may vary according to various exemplary embodiments.

For clarity, an example of the detector in which the characteristic providing unit is the metallic member, such as the metal bracket 220 of FIG. 2, and the characteristic changing unit is the coil unit 210 of FIG. 2 will be described. The detector 120 of FIG. 1 may be formed between the stand 100 and the display 110 as illustrated in FIG. 2. For example, the metal bracket 220 may be fixed to the stand top plate 100-3 of the stand 100, and the sensor including the coil unit 210 may be formed in the main body or the fixing plate 100-1 of the stand 100. In this example, the metal bracket 220 and the coil unit 210 may be located in such a manner that center points of the metal bracket 220 and the coil unit 210 correspond to each other. A bottom surface of the metal bracket 220 may have a rectangular shape, and the coil unit 210 may be formed in a circular form. The metal bracket 220 according to an exemplary embodiment may be formed in a Korean alphabet '⊏'-shaped form. The coil unit 210 may be formed on a board 200, and the board 200 may be attached to the fixing plate 100-1.

The structures of the metal bracket 220 and the coil unit 210 may be variously modified. For example, the '⊏'-shaped metal bracket 220 attached to the stand top plate 100-3 may be modified to a plate form. In another example, in response to a material for the stand top plate 100-3 being a poly-based material, the metallic bracket 220 may not have a coupled form of metallic plate, but may have a form of a metal coating layer which is formed on the stand top plate 100-3 through a plating treatment. For example, the coil unit 210 may be formed on the board 200, for example, a printed circuit board (PCB). In another example, the coil unit 210 may be directly formed in one region of the top fixing plate 100-1 of the main body. In this example, it may be assumed that the stand 100 is not formed of a metal. Exemplary embodiments are not limited thereto.

A signal corresponding to a distance difference between the metal bracket 220 and the coil unit 210, that is, a relative distance difference from the other side object may be sensed through the detector 120, and may be changed for example, according to the operation of the driving shaft 100-2. Accordingly, as the distance changes, a characteristic of the coil unit 210, for example, an impedance component may be changed, and thus a current flowing through the coil unit 210 or a voltage between both terminals of the coil unit 210 may be changed. The sensor coupled to the coil unit 210 on the board 200 may detect the characteristic change of the coil unit 210 through the current or voltage detection. The detector 120 may store a reference value for a characteristic change generated in the normal raising and lowering of the stand top plate 100-3. The detector 120 may determine an abnormal state by comparing a detection result of characteristic change generated in the abnormal raising and lowering of the stand top plate 100-3 with the stored reference value.

For example, in response to a finger or a foreign material being jammed as illustrated in FIG. 1A, the detector 120 may detect an operation of the stand top plate 100-3 slower than the normal operation or a stop state of the stand top plate 100-3. The detector 120 may perform the determination by comparing the detected value (that is, the sensed value) with the pre-stored reference value in the normal state.

The detector 120 may determine the reference value and store the determined reference value through various methods which will be described later in detail. For example, the reference value may be determined in such a manner that calibration is performed in consideration of various factors, such as a mechanism deviation, a surrounding metal effect, and a temperature environment the display apparatus 90. In another example, the reference value may be determined by calculating an average value based on sensing data (or sensed values) acquired after the stand top plate 100-3 is operated several times, and may be stored. In another example, the reference value may be determined by calculating an average value of the sensing data (or sensed values) in a state that a minimum sensed value and a maximum sensed value are excluded, and may be stored. In another example, the reference value may be stored to have a lowest threshold value smaller than a normal value in consideration of a margin.

The detector 120 may determine the abnormal operation state of the stand top plate 100-3 by comparing the reference value determined and stored according to the above-described various methods with sensing data detected during the operation of the stand top plate 100-3. For example, in response to determining that a problem is due to an internal factor, for example, a mechanical defect, the detector 120 may output a detection signal which allow an operation, such as a speed control operation of the corresponding driving shaft 100-2, that the problem occurs. The output detection signal may be provided to the motor driver which operates the driving shaft 100-2 of the motor.

Through the above-described configuration, the display apparatus may prevent the abnormal operation and an accident, such as jamming, ]even in a limited space environment. For example, because the moving distance and speed are detected without detection of current change of the encoder or motor, the effect of a neighboring environment interface may be minimized.

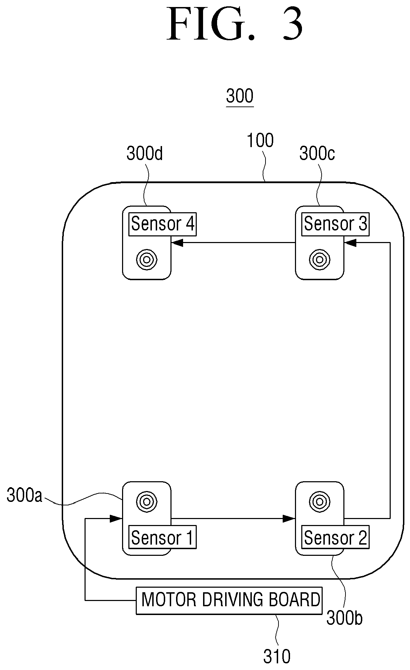

FIG. 3 is a diagram illustrating an arrangement structure of a detector, according to an exemplary embodiment.

Referring to FIG. 3 with FIG. 2, a detection device 300 according to an exemplary embodiment may include a plurality of sensors 300a to 300d provided in an upper part of the stand 100 of FIG. 2, that is, in the fixing plate 100-1. The plurality of sensors 300a to 300d may be formed in corners thereof, and coupled in a cascade structure. The cascade structure may refer to a structure in which a corresponding control signal (for example, enable signal, error signal, and the like) sequentially passes through a first to a third sensors 300a to 300c in order for a motor driving board 310 to share the control signal with a fourth sensor 300d. The cascade structure may reduce the number of signal transmission lines formed on the board 200 of FIG. 2.

FIG. 3 illustrates an exemplary embodiment having the signal lines formed in the cascade structure, but the signal lines may be coupled between the plurality of sensors 300a to 300d and the motor driving board 310, and thus the arrangement structure is not limited to the cascade structure.

In an exemplary embodiment, the detection device 300 may not include four sensors 300a to 300d as illustrated in FIG. 3. For example, the number of sensors may be correspond to a number of driving shafts. This is, a driving shaft in a corresponding portion is more precisely controlled using sensing data sensed through a corresponding sensor of the plurality of sensors 300a to 300d. Accordingly, the structure of the detector device 300 in FIG. 3 may be suitable for the structure in which the driving unit 100 drives four driving shafts. For example, in response to four sensors being used, four guide rods may be used as the driving shafts, and two guide rods may be driven through a first motor and the remaining two guide rods may be driven through a second motor.

The detection device according to an exemplary embodiment may include one or more sensors, and the detection device may include a number of sensors corresponding to the number of driving shafts (or guide rods). However, the detection device is not limited thereto.

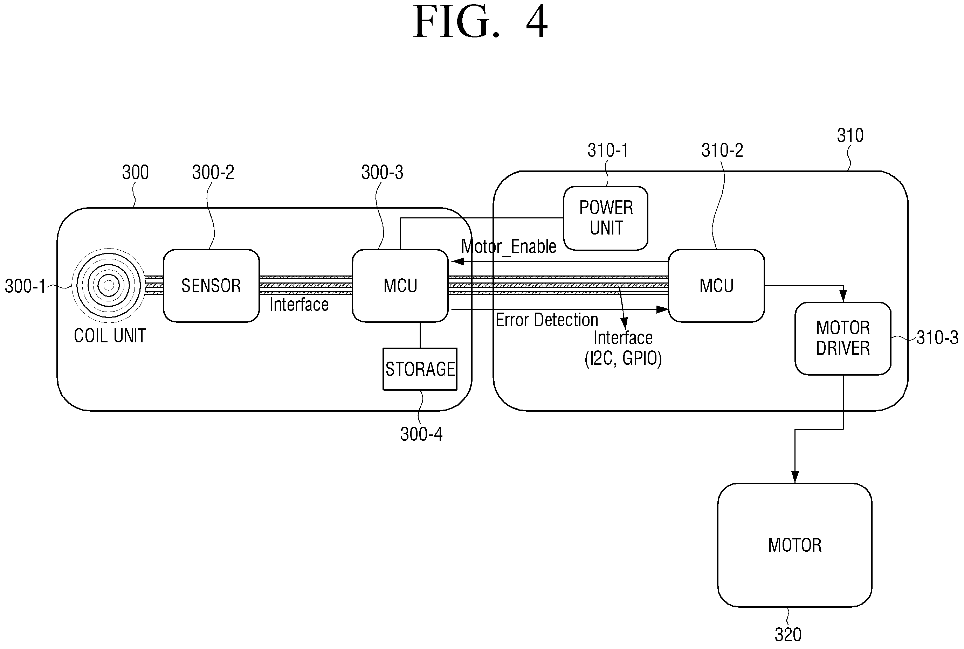

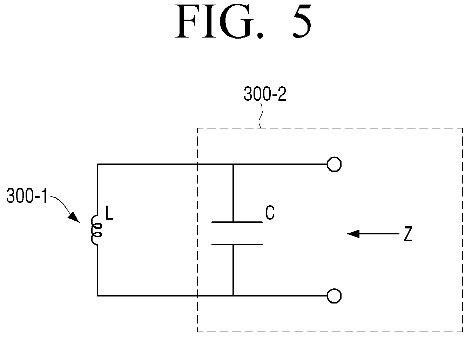

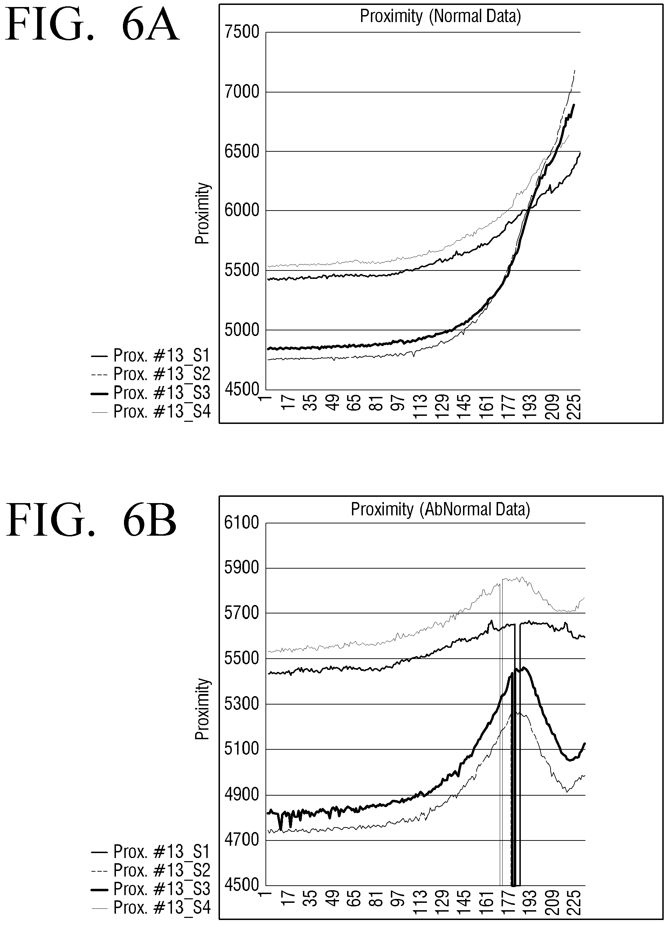

FIG. 4 is a block diagram illustrating a detailed configuration of a detection device and a motor driving board according to an exemplary embodiment. FIG. 5 is an illustrative diagram illustrating a sensor coupled to a coil unit according to an exemplary embodiment. FIG. 6 is a graph illustrating a change amount in a normal state and an abnormal state determined through a plurality of sensors according to an exemplary embodiment.

As illustrated in FIG. 4, the detection device 300 according to an exemplary embodiment may include a part or all of a coil unit 300-1, a senor 300-2, a controller 300-3, and a storage unit 300-4.

The phrase "include a part or all" may mean that the detection device 300 may be configured in such a manner that one or more components, such as the storage unit 300-4, may be omitted or integrated into other components such as the controller 300-3. The detection device 300 will be described to include all the components.

Referring to FIG. 4 with reference to FIG. 2, the coil unit 300-1 may be formed to match with a central portion of the metallic member, that is, the metal bracket 220 of FIG. 2. The coil unit and the metal bracket have been described above with reference to FIG. 2. The inductance of the coil unit 300-1 may change according to a distance difference from the upper metal bracket 220.

The sensor 300-2 may include, for example, a capacitor C as illustrated in FIG. 5. The capacitor C of the sensor 300-2 may, together with the coil unit 300-1, form an LC resonance circuit. FIG. 5 illustrates a sensor 300-2 that may detect an impedance change in a current form. The configuration of the sensor 300-2 may be variously modified, and the sensor 300-2 may have any configuration which can detect a change of the coil unit 300-1, that is, the impedance change in a current or voltage form. The sensor 300-2 according to an exemplary embodiment may include a sensor configured to sense a characteristic change with respect to a set resonant frequency. The characteristic change may refer to current or voltage change due to an effect of the metal bracket on a magnetic field of the coil unit 300-1. For example, in response to the voltage being constant, according to the Ohm's law, the current may be increased according to reduction of the resistance.

The controller 300-3 may acquire data sensed through the sensor 300-2, and perform a detection operation for detecting distance change, speed, and the like based on the acquired data. For example, the controller 300-3 may execute a software algorithm. In this example, the controller 300-3 may execute an operation algorithm to calculate the distance change or speed through the sensing data. In another example, the controller 300-3 according to an exemplary embodiment may detect the distance change and speed by comparing the sensed data with the reference value stored in the storage unit 300-4.

The storage unit 300-4 may store the reference value according to the normal operation of the stand top plate 100-3 illustrated in FIG. 2. For example, because reference values for a plurality of regions in FIG. 3 are different from each other, the storage unit 300-4 may store the reference values for each of the regions.

Accordingly, the controller 300-3 may compare the calculated value (for example, sensing data at fixed or random time intervals) with the reference value stored in the storage unit 300-4, and transmit the comparison result to the motor driving board 310. For example, in response to determining an error is generated, the controller 300-3 may transmit an error signal to the motor driving board 310.

In response to the sensing data being received from the plurality of sensors 300a to 300d, as illustrated in FIG. 3, the controller 300-3 may receive indication information for each of the regions. Accordingly, the controller 300-3 may compare the value calculated from the sensing data for each region with the reference value for the corresponding region stored in the storage unit 300-4.

In the process, the controller 300-3 may transmit an error signal, for driving all the driving shafts at the same time or at uniform speed, to the motor driving board 310, and the controller 300-3 may transmit a signal for notifying the motor driving board 310 of an error of a corresponding driving shaft in a region to operate the shaft at a faster speed (or slower speed) than other shafts.

FIG. 6A is a graph representing reference values stored in the storage unit 300-4, and FIG. 6B is a graph representing a change amount of data sensed in an abnormal operation state of the stand top plate 100-3. FIGS. 6A and 6B represent change amounts for the plurality of sensors 300a to 300d of FIG. 3. The controller 300-3 may determine the normal state and the abnormal state by comparing two values and transmit the comparison result to the motor driving board 310.

The detection device 300 may perform a sensing operation in response to an enable signal being received from the motor driving board 310. The signal extracted in the detection device 300 may be an impedance component or an impedance value. The detection device 300 may have stored the value in a normal state by measuring a distance from the other side object and outputting an error detection signal in response to an abnormal distance change or abnormal speed change being detected.

As illustrated in FIG. 4, the motor driving board 310 configured to drive the motor 320 may include a part or all of a power unit 310-1, a controller 310-2, and a motor driver 310-3. The phrase "include a part or all" may have the same meaning as described above.

The power unit 310-1 may supply power to the detection device 300, for example, in the raising and lowering operation of the stand top plate 100-3 or the display 110.

The controller 310-2 may control the overall operation for all the components in the motor driving board 310. The controller 310-2 may process a signal in conjunction with the controller 300-3 of the detection device 300. For example, in response to an error signal being received from the controller 300-3 of the detection device 300, the controller 310-2 may transmit the error signal to the motor driver 310-3. The controller 310-2 may provide an enable signal (Motor_Enable) to the controller 300-3 of the detection device 300 in the operation of the motor.

As illustrated in FIG. 4, the controller 310-2 of the motor driving board 310 may perform inter integrated circuit (I2C) communication with the controller 300-3 of the detection device 300, and the I2C communication between the controllers 310-2 and 300-3 may be performed through a general purpose input/output (GPIO) terminal. The I2C communication may be a communication method which exchanges data through a signal line. The I2C communication may be used for communication between chips, and may be a communication method which transmits and receives a clock signal and a data signal through two signal lines. The GPIO terminal may input and output a high signal and a low signal through pins, and thus data transmission and reception may be performed through the GPIO terminal. The signal may be transmitted through various signal transmission methods, such as universal asynchronous receiver/transmitter (UART), serial peripheral interface (SPI), or an analog signal in addition to I2C, and thus the signal transmission method is not limited thereto.

The motor driver 310-3 may control the motor 320 according to a command of the controller 310-2 and may drive the driving unit as a whole. That is, the driving of the motor 320 may drive the driving shaft 100-2 of FIG. 2.

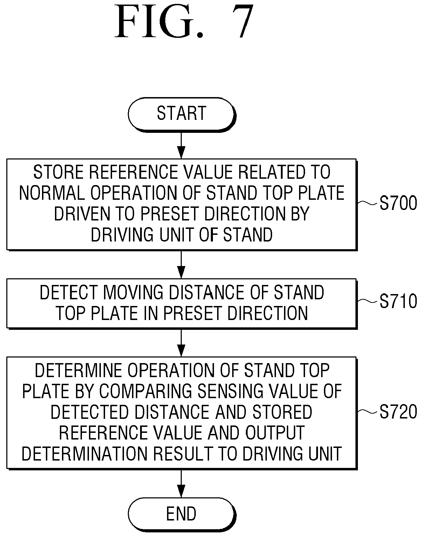

FIG. 7 is a flowchart illustrating a stand driving process of a display apparatus according to an exemplary embodiment.

For clarity, referring to FIG. 7 with FIGS. 1A and 2, the stand 100 according to an exemplary embodiment may store the reference value related to the normal operation of the stand top plate 100-3 which is driven to a preset direction through a driving unit, for example, a motor (S700). The driving to the preset direction may refer to the raising and lowering operation or the left and right rotation of a screen direction. The reference value may be determined in various forms and stored as described above, and thus detailed description thereof will be omitted.

The stand 100 may detect a moving distance of the stand top plate 100-3 in the preset direction (S710). For example, the stand 100 may detect a distance between the metallic member and a coil using impedance change of the coil of which the impedance is changed according to the distance from the metallic member disposed in one side of the stand top plate 100-3. The coil may be disposed in one side of the stand 100. The detected impedance characteristic may be measured in a current or voltage form.

The stand 100 may determine the operation of the stand top plate 100-3 by comparing the sensed value of the detected distance with the stored reference value, and outputting the determined result to the driving unit (S720). Accordingly, the stand top plate 100-3 may be driven through the driving unit to perform a stop operation or a reverse operation of a previous operation.

For example, in response to the operation of the stand top plate 100-3 being determined as abnormal based on the comparison result, the detector 120 of the stand 100 may allow the motor 320 to be stopped or to operate in reverse by providing an error signal to the motor driving board 310 of FIG. 4. As an example of the reverse operation, the motor driving board 310 may allow the motor 320 to perform a raising operation in response to the lowering operation being performed, and may allow the motor 320 to perform a lowering operation in response to the raising operation being performed.

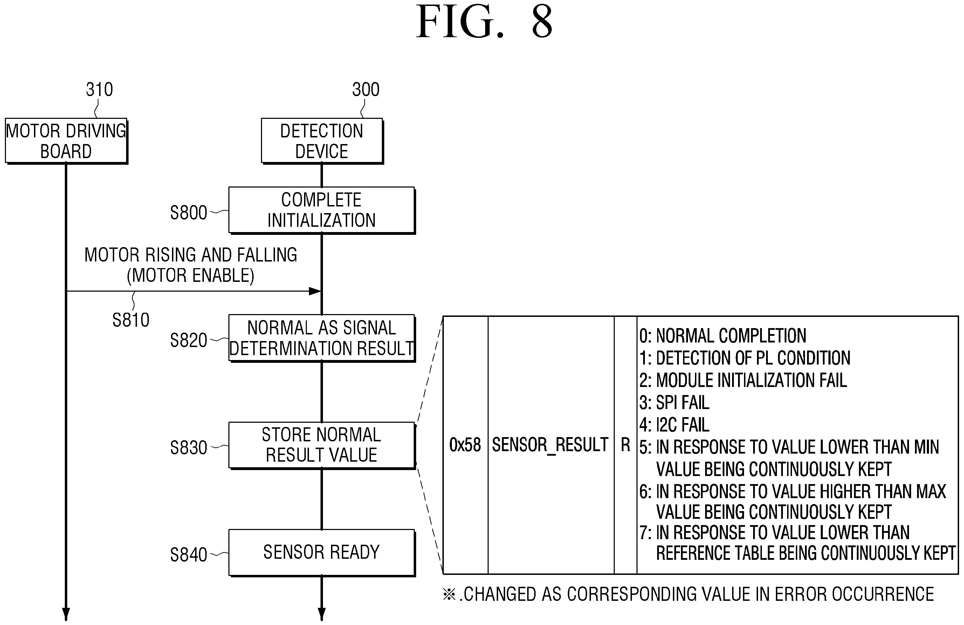

FIG. 8 is a diagram illustrating an operation process of the detection device detecting normal operation of the motor driving board of FIG. 4 in the stand of FIG. 1A.

As illustrated in FIG. 8, the detection device 300 may be initialized, for example, in turn-on by a request of the user (S800). The initialization may include booting. The detection device 300 may enter a standby state.

In response to a motor enable signal being received from the motor driving board 310 (S810), the detection device 300 may determine, based on a change amount, whether the operation of the stand top plate 100-3 is normal (S820).

In response to a determination result indicating the operation is normal, the detection device 300 may store the corresponding result, that is, sensing data, for example, in a register (S830). As illustrated in FIG. 8, the determination result may include various types of information. The information may be stored in various forms such as a binary bit form.

The detection device 300 may again enter the standby (or ready) state (S840). The standby state may include a sleep state, but the detection device 300 may enter various operation modes, such as a normal mode or a stop mode, according to the need. After the sensing operation is terminated, the power may be turned off or may remain in an on state, and the power state may be changed according to the application scenario. Accordingly, the operation mode may be set by a system designer. The sleep mode may be related to power-saving.

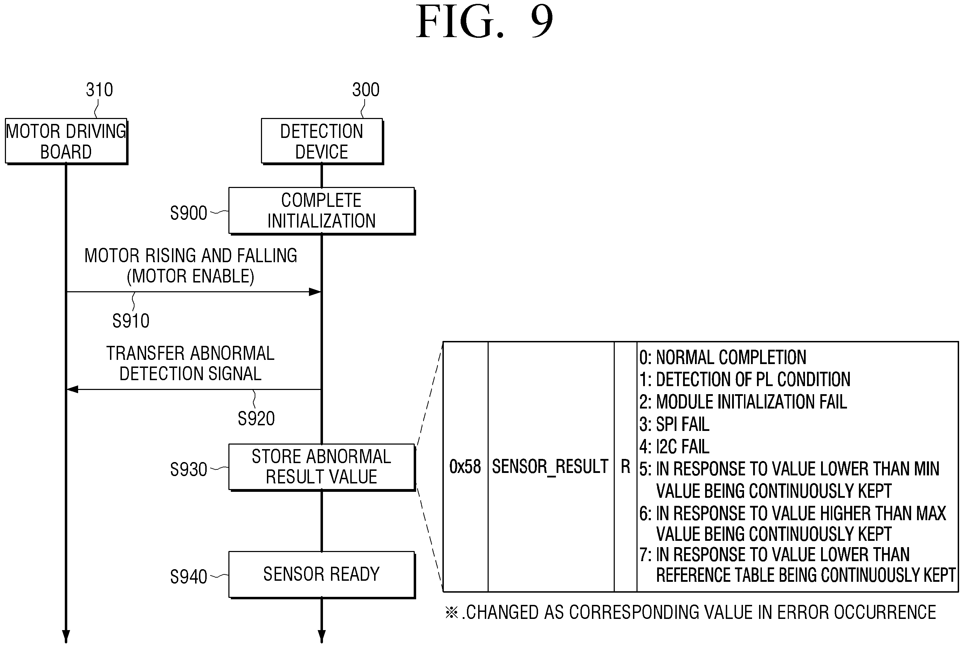

FIG. 9 is a diagram illustrating an operation process of the detection device detecting an abnormal operation of the motor driving board of FIG. 4 in the stand of FIG. 1A.

As illustrated in FIG. 9, the detection device 300 may be initialized, for example, in turn-on by a request of the user (S900). The initialization may include booting. The detection device 300 may enter a standby state.

In response to a motor enable signal being received from the motor driving board 310 (S910), the detection device 300 may perform a sensing operation and determine, based on a change amount, whether the operation of the stand top plate 100-3 is normal, and may notify the motor driving board 310 of a detected abnormal operation state in response to determining indicating the operation being abnormal (S920).

For example, the detection device 300 may determine whether the stand top plate 100-3 moves at slow speed as compared with the normal operation, or whether the stand top plate 100-3 is stopped at a fixed distance as the determination result. In response to the abnormal detection signal being transmitted to the motor driving board 310, the motor driving board 310 may transmit the abnormal detection signal to the motor. The motor driving board may determine the operation of the motor as abnormal, and the motor may perform a reverse operation of the current operation or a stop operation in response to receiving the corresponding abnormal detection signal.

The detection device 300 may store the abnormal result value in a register (S930), and the detection device may again enter the standby (ready) state (S940).

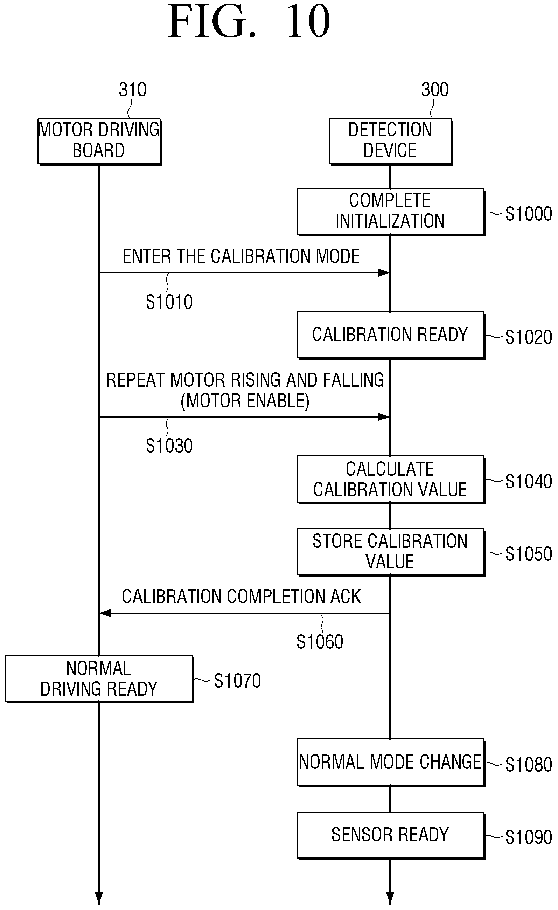

FIG. 10 is a diagram illustrating a calibration process according to an exemplary embodiment.

To determine a normal value and an abnormal value, the detection device 300 of FIG. 10 may perform an initial calibration in the factory or continuously perform the calibration, even in use. The calibration process may be continuously performed to account for various deviations that may occur, such as those due to differences in various sensors, influences of a neighboring metal, a temperature environment, and the like.

As illustrated in FIG. 10, the detection device 300 may perform initialization, for example, in response to being turned-on by a request of the user (S1000).

In response to a command to enter the calibration mode being received from the motor driving board 310 (or an external apparatus or the user) (S1010), the detection device 300 may prepare a for calibration operation, and enter a calibration ready state (S1020).

The detection device 300 may determine a required threshold value through by repeating various operation, such as raising and lowering operations, according to an enable signal received from the motor driving board 310 (S1030, S1040). For example, a value within a minimum normal operation range may be set as the threshold value, and may be determined by analyzing sensed data acquired through a plurality of repeat operations.

After the operation and determination of the value are performed, the detection device 300 may store the calibration value (S1050), and transmit a completion signal ACK to the motor driving board 310 (S1060).

The detection device 300 and the motor driving board 310 may change the operation state to a normal driving operation state (S1070, S1080) and again enter the standby (ready) state to prepare for a next operation (S1090).

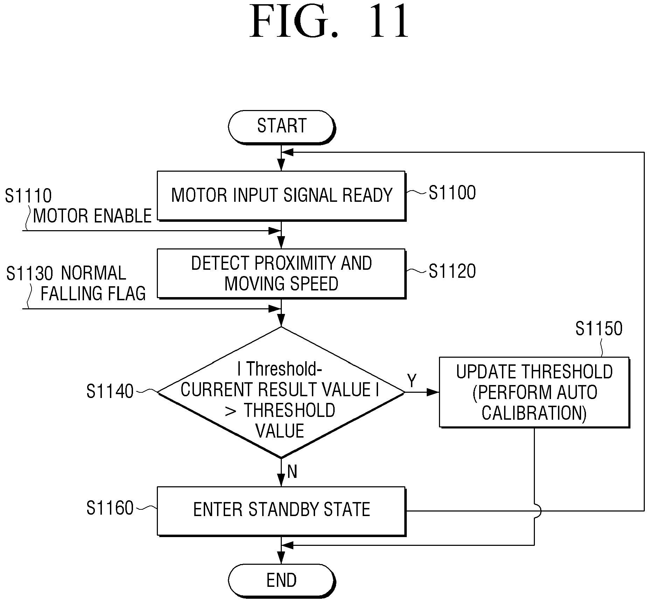

FIG. 11 is a diagram illustrating a calibration process according to an exemplary embodiment.

For example, the threshold reference value may be changed according to the environment, or change of the user after the release, and the change of the threshold value may be caused under the normal use operation. Accordingly, the detector 120 of FIG. 1A may perform an automatic calibration operation. That is, in response to the threshold value being abnormally large or small, even in a state that a normal flag is received during monitoring of an operation state in the normal raising and lowering operation, the detector may perform the automatic calibration operation.

Referring to FIG. 11 with reference to FIG. 1A, in response to an enable signal being received from the motor driving board 310 of FIG. 4 (S1100, S1110), the detector 120 according to an exemplary embodiment may detect sensing data, such as proximity and moving speed (S1120).

The detector 120 may receive a flag indicating normal lowering from the motor driving board 310 of FIG. 4 (S1130).

An absolute value of the difference between the reference value the current result value is then compared to the threshold value (S1140).

In response to a difference between the reference value and a current result value (that is, the sensed value) being outside of the threshold value while the normal flag is received, the detector 120 may perform an automatic calibration operation (S1150). The pre-stored reference value may be updated through the automatic calibration operation.

In response to the difference not being outside of the threshold value in operation S1140, the detector 120 may store the corresponding sensed value and enter the standby state (S1160).

In response to a termination request of the user, for example, a power turn-off command being presented in the repeated operation process, the detector 120 may terminate the corresponding operation.

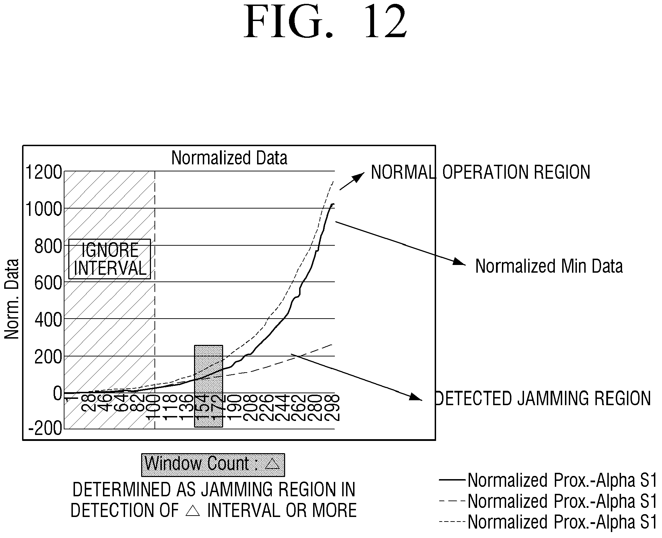

FIGS. 12, 13, 14A, 14B and 14C are diagrams additionally illustrating various operations of the detection of FIGS. 1A, 1B and 1C. Hereinafter, in response to an X-axis in the graphs corresponding to time (t), a Y-axis may indicate a raw data value read out from a register in response to a sensed inductance value being changed according to a distance. The raw data value may indicate a voltage, a current, speed, and the like.

Referring to FIG. 12 with reference to FIGS. 1A and 1B, the detectors 120 and 120', according to various exemplary embodiments, may set normalized minimum data (Normalized Min Data) included in a normal operation range in consideration of a margin in response to the reference value being set. Accordingly, a comparison target of the sensing data may be the corresponding normalized minimum data. The detector 120 may determine a jamming operation in response to the sensing data being less than the corresponding normalized minimum data. The detector 120 may determine the operation state as normal in response to the sensing data being larger than the corresponding normalized minimum data.

Because the detector 120 may set a region in which detection is difficult as an ignore interval, the detector may set a part which is regarded as a jamming region through window count in response to detection of several ignore intervals.

For example, in response to the sensed data being input, the detector 120 may perform the comparison operation after a time period, an ignore interval, has elapsed. Although the detector 120 may not directly determine a jamming region, even in response to a difference between the reference value and the sensing data being generated through the comparison operation, the detector may finally determine the jamming region after the comparison between next sensing data and the reference value. This may refer to the window count. That is, the detector may put the reservation interval before the determining of the final jamming region.

In FIG. 12, it may be assumed that the driving shafts of the motor are controlled at a uniform speed.

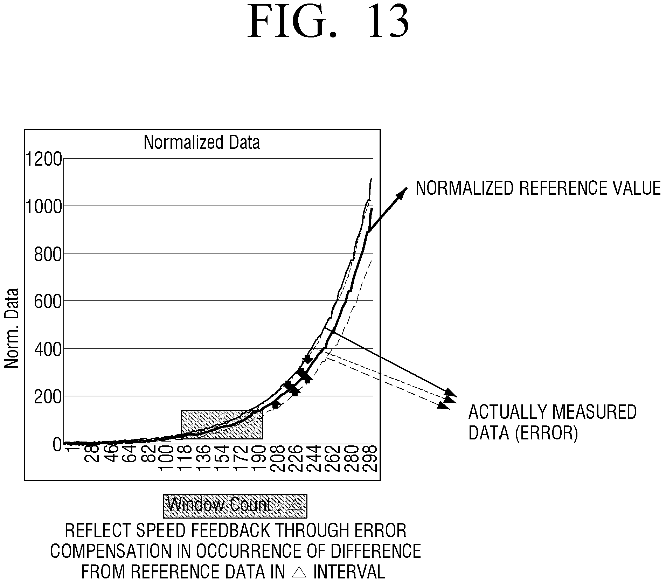

As illustrated in FIG. 13, the driving shafts of the motor may be controlled at different speeds. This may be caused by the structural defect of a component, such as the driving shaft inside of the stand 100" of FIG. 1C.

The detector 120 of FIG. 1A may set the reference value as illustrated in FIG. 13. In response to the sensed data, that is, the measured data being the input in the process, the detector 120 may determine error generation by comparing the measured data with the reference value.

In response to the actually measured data value differing from the reference value for a fixed interval or as a whole through the comparison with the reference value, for example, in response to the actually data value being located over or below the reference value as illustrated in FIG. 13, the detector 120 may allow the speed of the shaft to be controlled to compensate the corresponding error.

In response to the phenomenon as in FIG. 13 being caused in two driving shafts, on the assumption that four driving shafts are provided as described above, the detector 120 may operate only the corresponding shafts in which the error is generated at an earlier start time or faster than the other driving shafts.

In response to noise being included in the sensing data or offset adjustment being necessary, the detector 120 of FIG. 1A may remove the noise through an interpolation method or adjust the offset.

For example, in response to a value of specific data in the sensing data being largely different from neighboring values, the detector 120 may perform an operation, which sets the corresponding value as an average value of neighboring values, and the like.

The detector may normalize the sensing data by adjusting the offset by a generated offset.

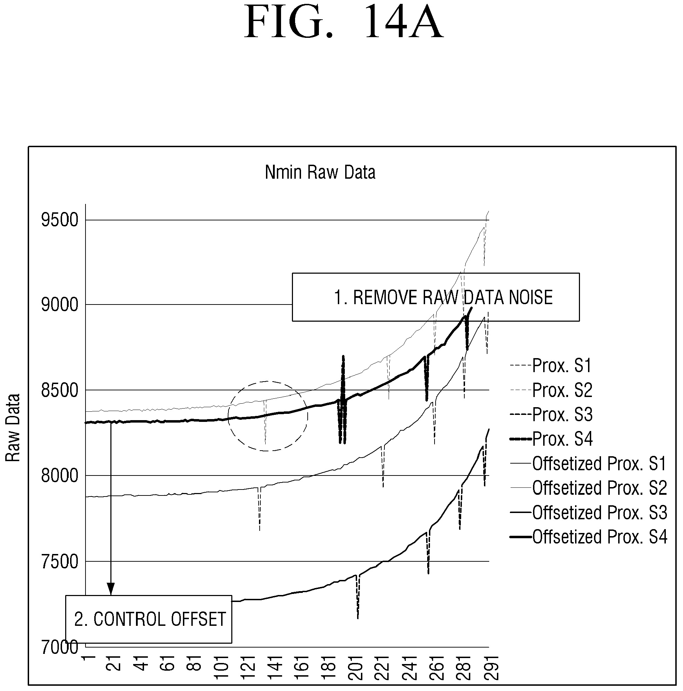

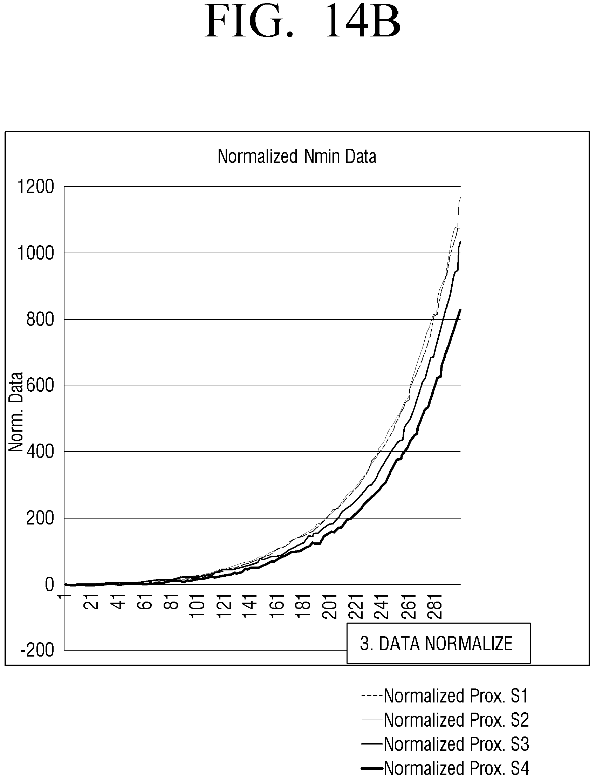

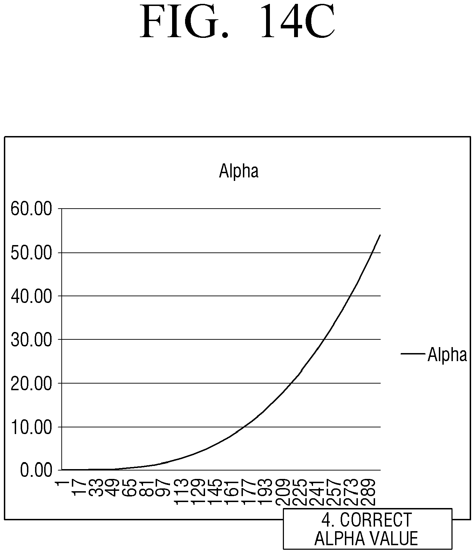

In response to the calibrated value being set as the reference value, the operation state may be normal, but an interval indicating abnormal operation may occur. Erroneous detection of the abnormal operation may be prevented by setting an alpha value, that is, a margin, as illustrated in FIG. 14C. For example, a final reference value may be determined by reflecting the margin (for example, alpha value) to an operable minimum value, for example, a minimum reference value determined through repeat. For example, the final reference value may be represented with a value that the corresponding alpha value of FIG. 14C is subtracted from the normalized data of FIG. 14B.

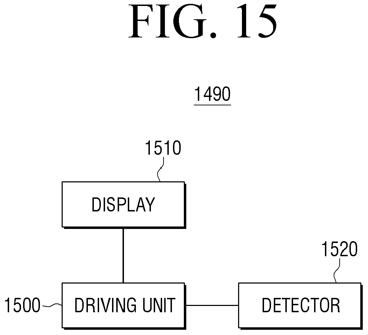

FIG. 15 is a block diagram illustrating a configuration of a display apparatus according to an exemplary embodiment.

FIG. 15 is a diagram illustrating a circuit connection relationship in the display apparatus of FIG. 1A. A driving unit 1500, a display 1510, and a detector 1520 of a display apparatus 1490 illustrated in FIG. 15 is not largely different from the stand 100, the display 110, and the detector 120 of FIG. 1A, and thus detailed description thereof will be omitted.

The driving unit 1500 may be variously changed. For example, the driving unit 1500 may not simply refer to only the stand 100. However, because the stand 100, the display 110, and the detector 120 may include respective controllers, the stand 100, the display 110, and the detector 120 may be understood to include parts or the whole of the different controllers. In this example, because the driving unit 1500 is freely formed in one chip form, the driving unit 1500 is not limited to any one form.

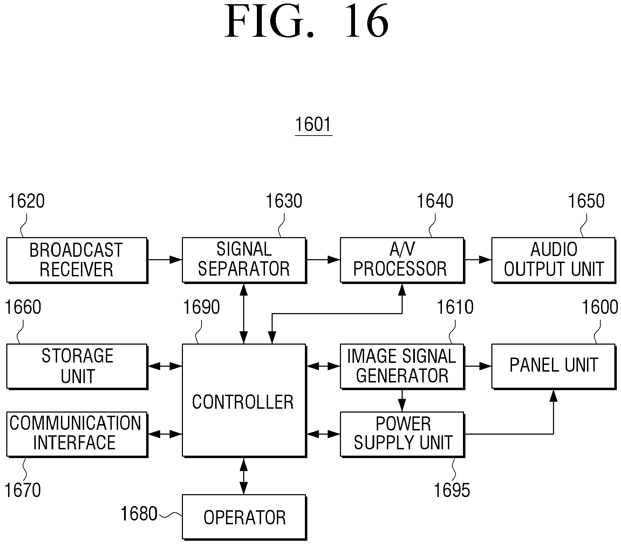

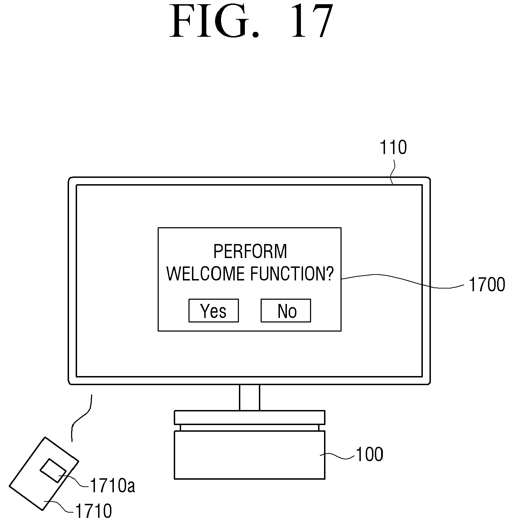

FIG. 16 is a block diagram illustrating a detailed configuration of a display 1601. The display 1601 may be similar to the displays illustrated in FIGS. 1A, 1B and 1C, and FIG. 17 is an illustrative diagram illustrating a UI screen for determining whether to perform a welcome function according to an exemplary embodiment.

As illustrated in FIG. 16, the display (or the display apparatus) 1601 according to an exemplary embodiment may include a panel unit (display panel or a display panel module) 1600, an image signal generator 1610, a broadcast receiver 1620, a signal separator 1630, an audio/video (A/V) processor 1640, an audio output unit 1650, a storage unit 1660, a communication interface 1670, an operator (or a user input unit or interface) 1680, a controller 1690, and a power supply unit 1695. A part or all of the rest components other than the panel unit 1600 and the operator 1680 may be a signal processor according to an exemplary embodiment.

The panel unit 1600 may display an image using a backlight. The panel unit 1600 may be a liquid crystal display (LCD) panel which displays a gray by transmitting light emitted from the backlight through a liquid crystal (LC) or controlling the degree of the transmitted light. Accordingly, the panel unit 1600 may receive power required for the backlight through the power supply unit 1695 and transmit the light emitted from the backlight to the LC. The panel unit 1600 may receive power for a pixel electrode and a common electrode from the power supply unit 1695 and display the image by controlling the LC according to an image signal received from the image signal generator 1610 to be described later.

In response to the welcome function according to an exemplary embodiment being performed, the panel unit 1600 may display a graphic of the welcome function in a screen. For example, in response to use of the welcome function being set by the user through a UI screen (or a UI image) 1700 as illustrated in FIG. 17, that is, in response to a yes button being selected, the graphic is achieved. In response to a power button 1710a of a remote control device 1710, for example, a remote controller or a shortcut button for the welcome operation being selected by the user after the setup, the panel unit 1600 of the display 110 of FIG. 1A may display the welcome operation graphic, such as a logo, on the screen.

The image signal generator 1610 may provide an image signal to the panel unit 1600. For example, the image signal generator 1610 may provide image data and/or various image signals for displaying the image data to the panel unit 1600 in response to the image data. The image signal may transmits information for a light emitting period, a light emitting level and an addressing period which transmits address information to which the light emitting period is applied, and the image signal may have one light emitting period and one addressing period in one frame cycle.

The broadcast receiver 1620 may receive broadcast from a broadcasting station or a satellite in a wired or wireless manner, and demodulate the received broadcast.

The signal separator 1630 may divide the broadcast signal into a video signal, an audio signal, an additional information signal. The signal separator 1630 may transmit the video signal and the audio signal to the A/V processor 1640.

The A/V processor 1640 may perform signal processing, such as video decoding, video scaling, and audio decoding, on the video signal and the audio signal input from the broadcasting receiver 1620 and the storage unit 1660. The A/V processor 1640 may output the video signal to the image signal generator 1610 and output the audio signal to the audio output unit 1650.

In response to the received video signal and audio signal being stored in the storage unit 1660, the A/V processor 1640 may output the video and audio in a compressed form to the storage unit 1660.

The audio output unit 1650 may convert the audio signal output from the A/V processor 1640 into sound and may output the sound through a speaker or output the sound to an external apparatus coupled thereto through an external output terminal.

The image signal generator 1610 may generate a graphic user interface (GUI) provided to the user. The image signal generator 1610 may add the generated GUI to the image output from the A/V processor 1640. The image signal generator 1610 may provide an image signal corresponding to the GUI-added image to the panel unit 1600. Accordingly, the panel unit 1600 may display various types of information provided from the display 1601 and the image transmitted from the image signal generator 1610.

The image signal generator 1610 may extract brightness information corresponding to the image signal and generate a dimming signal corresponding to the extracted brightness information. The image signal generator 1610 may provide the generated diming signal to the panel unit 1600. The dimming signal may be a pulse width modulation (PWM) signal. It has been described that the image signal generator 1610 generates the dimming signal and provides the diming signal to the panel unit 1600, but the display may be implemented in such a manner that the panel unit 1600 which receives the image signal may autonomously generate the diming signal and use the generated diming signal.

The storage unit 1660 may store image content. For example, the storage unit 1660 may receive the image content in which the video and audio are compressed from the AN processor 1640, store the received image content, and output the stored image content to the A/V processor 1640 according to control of the controller 1690. The storage unit 1660 may be include one or more among a hard disc, a nonvolatile memory, a volatile memory, and the like.

The operator 1680 may be implemented include one or more among a touch screen, a touch pad, a key button, a key pad, and the like, and provide a user operation of the display 1601. The example that the control command is received through the operator 1680 provided in the display 1601 has been described in an exemplary embodiment, but according to various exemplary embodiments, the operator 1680 may receive the user operation from an external control device (for example, remote controller). The operator 1680 may receive the control command for driving the stand top plate 100-3 of the stand 100 of FIG. 2 to the preset direction, that is, a user command for performing the welcome function and transfer the user command to the controller 1690.

The communication interface 1670 may be formed to couple the display 1601 to an external apparatus, and the display may be connected to the external apparatus through a local area network (LAN) and an Internet network as well as through a universal serial bus (USB) port.

The controller 1690 may control the overall operation of the display 1601. For example, the controller 1690 may control the image signal generator 1610 and the panel unit 1600 to display the image according to the control command received through the operator 1680. In response to the user command for driving the stand top plate 100-3 of the stand 100 to the preset direction being received, the controller 1690 may transfer the user command to the stand 100 of FIG. 1A. This may refer to an operation for performing the welcome function according to an exemplary embodiment.

For example, in response to a power turn-on command (or user command through a shortcut key) being provided from the user to turn-on the device and perform the welcome function according to an exemplary embodiment, the controller 1690 may receive a control signal related to the turn-on command through the operator 1680 and control the operation of the stand 100 to be performed during the booting operation of the internal components such as the communication interface 1670. The stand 100 may emit a light to the outside, for example, through the light emitting unit in the inside thereof to notify the user that the welcome function is being performed. In response to determining a fixed time elapsed or the welcome operation of the stand 100 is terminated by the operation of the limit switch and the like in the stand 100, the controller 1690 may terminate the light emission of the light emitting unit. The operation of the light emission may be autonomously controlled in the stand 100, and thus this is not limited thereto.

In another example, in response to a power turn-off command (or a release command through a shortcut button) being provided from the user to terminate the welcome function, the controller 1690 may not perform a power control operation such as turn-off of the internal components based on the turn-off command, but the controller 1690 may terminate the operation of the stand 100 in advance and then perform a turn-off operation based on a control signal provided from the stand 100. For example, the controller 1690 may interrupt the power provided to the internal components by controlling the power supply unit 1695 through the control signal provided from the stand 100.

The power supply unit 1695 may supply the power to the components of the display 1601. For example, the power supply unit 1695 may generate a plurality of driving voltages having different potentials, and perform feedback control on a voltage value of one driving voltage.

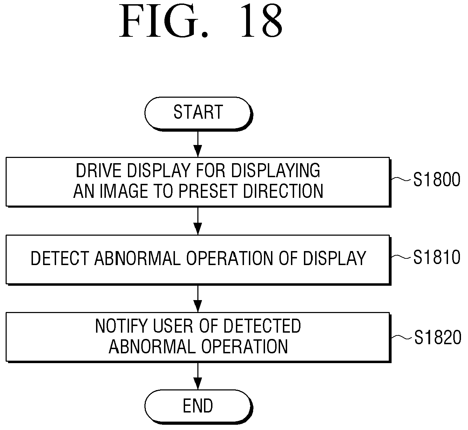

FIG. 18 is a flowchart illustrating a driving process of a display apparatus according to an exemplary embodiment.

For clarity, referring to FIG. 18 with FIG. 1A, the display apparatus 90 according to an exemplary embodiment may drive the display 110 configured to display an image to a preset direction (S1800). For example, the driving to the preset direction may include driving of the display 110 to rise and fall.

The display apparatus 90 may detect an abnormal operation of the display 110 being driven to the preset direction (S1810). The detection operation for the abnormal operation has been described above in detail, and thus detailed description thereof will be omitted.

In response to the abnormal operation of the display 110 driven to the preset direction being detected, the display apparatus 90 may notify the user of the abnormal operation (S1820). For example, the operation of notifying the user may include stopping the driving of the display 110 or reversing a current processing operation. In another example, the display apparatus 90 may output an alarm sound through an alarm unit (or a voice sound unit) separately provided in the stand 100. In another example, the display apparatus 90 may control a message to be displayed in a screen of the display unit 110. The method of notifying the user may be various, and thus this is not limited thereto.

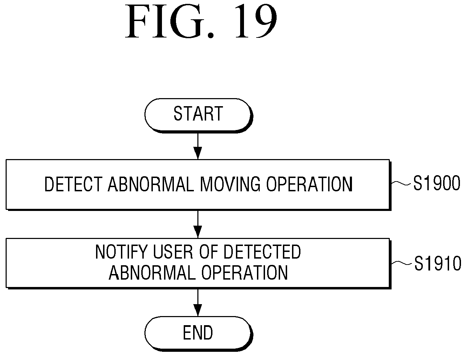

FIG. 19 is a flowchart illustrating a stand driving process of a display apparatus according to another exemplary embodiment.

For clarity, referring to FIG. 19 with FIG. 1A, in response to an abnormal moving operation of the display 110 configured to display an image or a moving plate (for example, the stand top plate 100-3 of FIG. 2) located below the display 110 being driven to a preset direction, the stand 100 of the display apparatus 90 according to an exemplary embodiment may detect an abnormal operation of the display 110 or the moving plate (S1900).

In response to the abnormal operation of the display 110 or the moving plate driven to the preset direction being detected, the stand 100 may notify the user of the abnormal operation (S1910).

The detector (or detection device) provided between the stand and the display has been described above with reference. However, the detector may be applied to any electronic apparatus. For example, the detector may be applied to an automatic washing machine in which a washing mode and a drying mode are divided using a clutch. The automatic washing machine may have used a motor and an actuator (or driving shaft) coupled to the motor. The automatic washing machine may determine whether clutch coupling is normally accomplished in the clutch conversion into the washing mode. The detector according to an exemplary embodiment may be applied to the determination. Accordingly, exemplary embodiments are not limited to the display apparatus.

In the electronic apparatus, the characteristic providing unit such as the metallic member and the characteristic changing unit such as the coil unit described above may not be necessarily located below the electronic apparatus and over a fixing device (or fixing structure) to which the electronic apparatus is fixed. For example, in any electronic apparatus in which the characteristic change due to the distance difference is used to determine the abnormal operation, the characteristic providing unit and the characteristic changing unit corresponding thereto may be provided in any positions. Accordingly, the positions of the electronic apparatus and the fixing device in which the characteristic providing unit and the characteristic change unit corresponding thereto are provided are not necessarily limited in the exemplary embodiment.

According to various exemplary embodiments, one or more of the above-described components may be selectively coupled and operated. All the components may be independently implemented with individual pieces of hardware, and part or all of the components may be selectively combined and implemented with a computer program having a program module which performs a part or all of functions combined in one or more pieces of hardware. Codes and code segments constituting the computer program may be readily deduced by those skilled in the art. Exemplary embodiments may be implemented in such a manner that the computer program may be stored in a non-transitory computer readable medium, and read and executed by the computer.

The non-transitory computer-recordable medium is not a medium configured to temporarily store data such as a register or a cache, but an apparatus-readable medium configured to permanently or semi-permanently store data. For example, the above-described various programs may be stored in the non-transitory apparatus-readable medium such as a compact disc (CD), a digital versatile disc (DVD), a hard disc, a Blu-ray disc, a universal serial bus (USB), a memory card, or a read only memory (ROM), and provided.

The foregoing exemplary embodiments and advantages are merely exemplary and are not to be construed as limiting the present invention. The present teaching can be readily applied to other types of apparatuses. Also, the description of exemplary embodiments is intended to be illustrative, and not to limit the scope of the claims, and many alternatives, modifications, and variations will be apparent to those skilled in the art.

## Claims

1. A display apparatus comprising:
a display configured to display an image;
a driving unit which supports the display and is driven to move up and down, or to rotate, according to a user input;
a detector configured to detect an operation state of the driving unit; and
a stand configured to allow an alarm signal for notifying a user of an abnormal operation state of the driving unit to be generated in response to the abnormal operation state of the driving unit being detected through the detector.

2. The display apparatus as claimed in claim 1, wherein the stand includes a plate disposed below the display, and controls the plate to move up and down through the driving unit.

3. The display apparatus as claimed in claim 2, wherein the detector includes:
a metallic member provided below the display; and
a coil unit disposed over the stand to correspond to the metallic member, and
wherein the detector determines the operation state by detecting impedance change of the coil unit according to a distance difference between the metallic member and the coil unit.

4. The display apparatus as claimed in claim 2, wherein the plate includes a light emitting unit which includes a plurality of light emitting diodes and emission thereof is controlled according to the user input.

5. The display apparatus as claimed in any one of claims 1 to 4, wherein the alarm signal is a signal for stopping driving of the display to notify the user of the abnormal operation state.

6. The display apparatus as claimed in any one of claims 1 to 5, further comprising an audio output unit for audio output,
wherein the alarm signal is a signal for controlling the audio output unit to output an alarm sound for notifying the user of the abnormal operation state.

7. The display apparatus as claimed in any one of claims 1 to 6, wherein the stand drives the driving unit in response to a control signal being provided from the display in which the user input is received.

8. The display apparatus as claimed in any one of claims 1 to 7, wherein the display includes a graphic generator configured to display a graphic for notifying the user that the driving unit is driving in a screen of the display.

9. The display apparatus as claimed in any one of claims 1 to 8, wherein the display includes a user interface (UI) generator configured to display a UI screen which allows the user to determine whether or not to perform determination of the abnormal operation state.

10. The display apparatus as claimed in any one of claims 1 to 9, wherein the stand includes:
a storage unit configured to store a reference value related to a normal operation of the driving unit; and
a controller configured to determine the operation state by comparing an output value of the detector with the reference value and control the alarm signal to be generated.

11. The display apparatus as claimed in any one of claims 1 to 10, wherein the display includes:
a display panel module configured to display the image;
a signal processor configured to receive a signal from an outside and process the received signal; and
a user input unit configured to receive the user input,
wherein the display panel module, the signal processor, and the user input unit are formed in a packaging form.

12. A method of driving a display apparatus, the method comprising:
detecting an abnormal operation of a display configured to display an image in response to the display being driven to move in a preset direction; and
notifying the user of the abnormal operation of the display driven to move in the preset direction in response to the abnormal operation of the display or the plate being detected.
